# EUROPÄISCHE PATENTANMELDUNG

(11) **EP 4 438 550 A1**
(43) Veröffentlichungstag der Anmeldung: **02.10.2024**
(21) Anmeldenummer: 23165316.3
(22) Anmeldetag: 30.03.2023
(51) Int. Cl.: C01B 3/02, B01J 4/00, B01J 19/00, B01J 6/00, B01J 19/02, B01J 19/24

(54) **PARTIALOXIDATIONSREAKTOR UND VERFAHREN ZUM HERSTELLEN EINES ROHSYNTHESEGASSTROMS**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Covella, Karsten, 60388 Frankfurt am Main (DE); Xu, Hongbin, 60439 Frankfurt am Main (DE); Müller-Hagedorn, Matthias, 60388 Frankfurt am Main (DE)
(74) Vertreter: Air Liquide

(57) **Zusammenfassung**

Die Erfindung betrifft einen Partialoxidationsreaktor (POX-Reaktor) zum Herstellen eines Rohsynthesegasstroms durch partielle Oxidation eines gasförmigen, flüssigen oder in einer Trägerflüssigkeit oder einem Trägergas dispergierten, festen, partikelförmigen, kohlenstoffhaltigen Einsatzstoffstroms in Gegenwart eines sauerstoffhaltigen Oxidationsmittelstroms und optional eines Moderatorstroms, enthaltend Wasserdampf und/oder Kohlendioxid. Die Erfindung betrifft weiterhin ein Verfahren zum Herstellen eines Rohsynthesegasstroms. Bei dem Partialoxidationsreaktor gemäß der Erfindung wird die Einführung eines zylinderförmigen oder kegelstumpfförmigen Einlassbereiches mit konstantem Durchmesser oder eingangsseitig kleinerem Durchmesser vorgesehen. Der Einlassbereich ist einem zylinderförmigen Hauptreaktorteil vorgeschaltet und stellt einen engpass-ähnlichen Abschnitt dar, da der größte Durchmesser des Einlassbereichs kleiner ist als der Durchmesser des zylinderförmigen Hauptreaktorteils.

## Beschreibung

### Gebiet der Erfindung

Die Erfindung betrifft einen Partialoxidationsreaktor (POX-Reaktor) zum Herstellen eines Rohsynthesegasstroms durch partielle Oxidation eines gasförmigen, flüssigen oder in einer Trägerflüssigkeit oder einem Trägergas dispergierten, festen, partikelförmigen, kohlenstoffhaltigen Einsatzstoffstroms in Gegenwart eines sauerstoffhaltigen Oxidationsmittelstroms und optional eines Moderatorstroms, enthaltend Wasserdampf und/oder Kohlendioxid. Die Erfindung betrifft weiterhin ein Verfahren zum Herstellen eines Rohsynthesegasstroms.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese.

Ein gängiges Verfahren zur Herstellung von Synthesegasen ist die autotherme Flugstromvergasung von gasförmigen, flüssigen oder festen Brennstoffen, wie sie beispielsweise in der DE 10 2006 059 149 B4 beschrieben ist. Am Kopf eines Reaktors sind zentral ein Zünd- und Pilotbrenner sowie rotationssymmetrisch zur Reaktorachse drei Vergasungsbrenner angeordnet. Über die Vergasungsbrenner wird einem Vergasungsraum des Reaktors Kohlenstaub mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur Kühlung von Rohgas und Schlacke Wasser eingedüst wird. Die Schlacke lagert sich im Wasserbad ab und wird über einen Schlackeaustrag abgeführt. Das gequenchte Rohgas wird wasserdampfgesättigt aus dem Quenchraum abgezogen und in nachfolgenden Reinigungsstufen gereinigt. Da der Brennstoff direkt mit dem Oxidationsmittel umgesetzt wird, müssen Oxidationsmittel und Brennstoff koaxial oder koannular zugeführt werden.

Auch die US 5,549,877 A1 beschreibt ein Verfahren und eine Vorrichtung zur Herstellung von Synthesegas, wobei ein sauerstoffhaltiges Oxidationsmittel zentral am Reaktorkopf zugeführt und gemeinsam mit ringförmig um die Oxidationsmittelzufuhr zugeführtem Brennstoff in den Reaktionsraum eingeführt wird, in dem der Brennstoff zunächst unterstöchiometrisch umgesetzt wird. Es bildet sich eine Flamme aus, die nach unten in den Reaktionsraum fortschreitet. In einer Rezirkulationszone strömen die in der Flamme vorhandenen Materialien nach oben zurück. In die Reaktionszone wird stromabwärts über eine ringförmige Leitung ein zusätzlicher Strom an Oxidationsmittel zugeführt, so dass sich eine weiter ausgedehnte Flammenzone bildet.

Typischerweise wird die partielle Oxidation von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Reaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel angebracht.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, angereicherte Luft oder reiner Sauerstoff (mit mindestens 95 mol% Sauerstoff) eingesetzt. Ein kohlenwasserstoffhaltiger Beschickungsstrom ist ein Strom, der Kohlenwasserstoffe wie Methan oder höhere Kohlenwasserstoffe oder andere wasserstoff- und kohlenstoffhaltige Moleküle (z. B. Alkohole wie Methanol, Ethanol) enthält. Dies kann auch ein Strom sein, der von einem vorgeschalteten Primärreformer kommt und neben Kohlenmonoxid (CO), Wasserstoff (H₂), CO₂und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Aufgrund der Reaktorgeometrie entsteht in aus dem Stand der Technik bekannten Partialoxidationsreaktoren eine Rezirkulationszone, die ein großes Volumen des Reaktors einnimmt. Dagegen bildet sich entlang der zentralen Achse des Reaktors zum Ausgang hin ein Strahl. Dieser Strahl zeichnet sich durch eine hohe Geschwindigkeit aus, die die verfügbare Reaktionszeit der mitgerissenen Moleküle minimiert. Infolgedessen ergibt sich eine Verweilzeitverteilung innerhalb des Reaktors, die durch einen Peak bei sehr kurzen Verweilzeiten und einen langen Auslauf durch die Rezirkulationszone gekennzeichnet ist. Um hohe Umsätze der Einsatzstoffe zu erzielen, ist jedoch eine ausreichende Zeit für die Umsetzung des Einsatzmaterials erforderlich, was bislang durch eine entsprechende Länge des POX-Reaktors realisiert wird.

Weiterhin ist es nachteilig, dass aufgrund der Ausbildung einer Rezirkulationszone hei-ßes Synthesegas zurück zur eingangsseitigen Reaktoroberseite des POX-Reaktors und zu dem dort angeordneten Brenner strömt und dort zu einem erhöhten Materialverschleiß führt, beispielsweise durch Korrosion (z. B. Hochtemperaturkorrosion) insbesondere der äußeren Rohre oder Kanäle des Brenners. Als Schutzmaßnehme wird der POX-Brenner daher zumeist gekühlt, was aber die Investitions- und Betriebskosten erhöht und Risiken birgt, falls die Brennerkühlung im Betrieb ausfällt.

Diese Nachteile sind besonders dann relevant, wenn die Produktionskapazität eines bestehenden Partialoxidationsreaktors erhöht werden soll, da ein höherer Durchsatz der Einsatzstoffe die beschriebenen Nachteile erhöht.

### Beschreibung der Erfindung

Die Aufgabe der vorliegenden Erfindung besteht daher darin, einen Partialoxidationsreaktor zum Herstellen eines Rohsynthesegasstroms anzugeben, der die erwähnten Nachteile der aus dem Stand der Technik bekannten Partialoxidationsreaktoren nicht aufweist.

Diese Aufgabe wird in einem ersten Aspekt der Erfindung durch einen Partialoxidationsreaktor mit den Merkmalen des Anspruchs 1 und in einem weiteren Aspekt der Erfindung durch ein Verfahren zum Herstellen eines Rohsynthesegasstroms mit den Merkmalen des Anspruchs 10 gelöst. Weitere Ausgestaltungen der Erfindung ergeben sich aus den Unteransprüchen der jeweiligen Kategorie.

Unter fluiden oder fluidisierten kohlenstoffhaltigen Brennstoffen oder kohlenstoffhaltigen Einsatzstoffströmen sind alle Gase, Flüssigkeiten, Schlämme, Aerosole und pneumatisch geförderten Feststoffpartikel zu verstehen, die Kohlenstoff in elementarer oder chemisch gebundener Form enthalten und die unter einer angelegten Scherspannung, einer äußeren Kraft oder einem Druckunterschied kontinuierlich fließen. Eine nicht ausschließliche Liste von Beispielen umfasst kohlenwasserstoffhaltige Gase wie Erdgas, kohlenwasserstoffhaltige Flüssigkeiten wie Naphtha, Erdölfraktionen, flüssige Raffinerierückstände, feste kohlenstoffhaltige Partikel wie Kohle- oder Kokspulver oder -stäube.

Unter einem sauerstoffhaltigen Oxidationsmittel ist jedes sauerstoffhaltige Fluid zu verstehen, wie z. B. reiner Sauerstoff mit beliebigem Reinheitsgrad, Luft oder jedes andere Fluid, das in der Lage ist, einem kohlenstoffhaltigen Reaktanten Sauerstoff zuzuführen.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ableiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist Dampf als Synonym für Wasserdampf zu verstehen, sofern nicht im Einzelfall das Gegenteil angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Unter einer Fluidverbindung zwischen zwei Bereichen der erfindungsgemäßen Vorrichtung oder Anlage ist jede Art von Verbindung zu verstehen, die es ermöglicht, dass ein Fluid, z. B. ein Gasstrom, von dem einen in den anderen der beiden Bereiche strömen kann, wobei zwischengeschaltete Bereiche oder Bauteile vernachlässigt werden. Unter einer direkten Fluidverbindung ist insbesondere jede Art von Verbindung zu verstehen, die es ermöglicht, dass ein Fluid, z. B. ein Gasstrom, direkt von dem einen in den anderen der beiden Bereiche strömt, wobei keine weiteren Bereiche oder Komponenten zwischengeschaltet sind, mit Ausnahme von reinen Transportvorgängen und den dafür erforderlichen Mitteln, z. B. Rohrleitungen, Ventile, Pumpen, Kompressoren, Speicher. Ein Beispiel wäre eine Rohrleitung, die direkt von dem einen in den anderen der beiden Bereiche führt.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Die Bedingungen der nichtkatalytischen Partialoxidation sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondre ist es kennzeichnend für die nichtkatalytische Partialoxidation, dass kein Katalysator indem Partialoxidationsreaktor vorhanden ist.

Notwendige Anpassungen der Bedingungen der nichtkatalytischen Partialoxidation an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Die Begriffe Eingang, eingangsseitig, Ausgang, ausgangsseitig beziehen sich auf die Strömungsrichtung der Einsatzstoffe durch den Partialoxidationsreaktor.

Das Adjektiv kuppelförmig bezeichnet eine Ausgestaltung eines Partialoxidationsreaktors oder von Teilen davon, bei denen die Außenwand und/oder die Innenwand Abschnitte eines kreisförmigen oder elliptischen Bogens nachbildet und eine höchste, vom Mittelpunkt des Hauptreaktorteils maximal entfernte Stelle umfasst, an der in der Regel der Partialoxidationsbrenner angeordnet ist.

Zur Erläuterung der Erfindung werden folgende Längenbezeichnungen verwendet:
- L1: Länge des Einlassbereiches
- D1: freier Innendurchmesser des Einlassbereiches (zylindrisch) bzw. eingangsseitiger freier Innendurchmesser des Einlassbereiches (kegelstumpfförmig)
- D3: ausgangsseitiger freier Innendurchmesser des Einlassbereiches (kegelstumpfförmig)
- D2: freier Innendurchmesser des Hauptreaktorteils
- Dh: hydraulischer Durchmesser des Zufuhrkanals für den sauerstoffhaltigen Oxidationsm ittelstrom

Der hydraulische Durchmesser des Zufuhrkanals für den sauerstoffhaltigen Oxidationsmittelstrom wird verwendet, weil der charakteristische Durchmesser des Sauerstoffstroms relevant für die Flammenlänge und damit für die Auswahl der Länge L1 ist. Wenn der Oxidationsmittelstrom durch den zentralen, einen kreisförmigen Querschnitt aufweisenden, ersten Zufuhrkanal in den Partialoxidationsreaktor eingeleitet wird, entspricht der hydraulische Durchmesser dem geometrischen Durchmesser dieses Zufuhrkanals. Wenn der der Oxidationsmittelstrom durch einen der ringspaltförmigen Zufuhrkanäle in den Partialoxidationsreaktor eingeleitet wird, entspricht der hydraulische Durchmesser der doppelten Spaltbreite dieses Zufuhrkanals.

Der Erfindung liegt die Erkenntnis zugrunde, dass bei einem Partialoxidationsreaktor die genannten Nachteile des Stands der Technik durch die Einführung eines zylinderförmigen oder kegelstumpfförmigen Einlassbereiches mit konstantem Durchmesser oder eingangsseitig kleinerem Durchmesser überwunden werden. Der Einlassbereich ist einem zylinderförmigen Hauptreaktorteil vorgeschaltet und stellt einen engpassähnlichen Abschnitt dar, da der größte Durchmesser des Einlassbereichs kleiner ist als der Durchmesser des zylinderförmigen Hauptreaktorteils. Diese verbesserte geometrische Ausgestaltung des erfindungsgemäßen Partialoxidationsreaktors ermöglicht eine höhere Synthesegasproduktion pro Einheit des Reaktorvolumens und verlängert die Lebensdauer des Partialoxidationsreaktors und seiner Bestandteile, insbesondere des POX-Brenners.

Im Einzelnen werden mit der erfindungsgemäßen Ausgestaltung des Partialoxidationsreaktors folgende Vorteile erzielt:
- Minimierung des relativen Volumens der sich im Hauptreaktorteil ausbildenden Rezirkulationszone der Gasströmung, ausgedrückt als Volumen der Rezirkulationszone, bezogen auf das Reaktorvolumen, sowie des Gesamtvolumens bei einem bestimmten Durchfluss,
- Erhöhung der Mindestverweildauer der Reaktionsgase im Partialoxidationsreaktor, wodurch eine höhere Synthesegasausbeute pro Reaktorvolumen erreicht wird,
- es wird verhindert, dass die heißen Reaktorgase den Brenner erreichen, wodurch die Lebensdauer des Partialoxidationsreaktors und seiner Bestandteile, insbesondere des Brenners, verlängert wird.

Die vorgeschlagene Lösung zur Erreichung dieser Ziele besteht darin, am oberen Ende des Reaktors einen Hals oder Kegelstumpf anzufügen. Das zusätzliche Volumen kann durch eine Verringerung der Länge des zylindrischen Reaktorteils mit dem großen Durchmesser kompensiert oder sogar überkompensiert werden. Der Radius des Halses bzw. der Basisradius des Kegelstumpfes wird so ausgelegt, dass in diesem oberen Reaktorteil keine signifikante Rezirkulation entstehen kann.

Obwohl die Flamme bereits im halsartigen Teil des Reaktors beginnt, führt der daraus resultierende Wärmestrom zur Wand nicht zu hohen Wandtemperaturen, da die Wände in diesem Teil des Reaktors durch den mit hoher Geschwindigkeit fließenden Einsatzstoffstrom effektiv gekühlt werden und dadurch selber vorgewärmt werden.

### Bevorzugte Ausgestaltungen der Erfindung

Ein zweiter Aspekt der Erfindung ist dadurch gekennzeichnet, dass der Einlassbereich zylinderförmig ist und das Längenverhältnis L1 zu Dh (L1/Dh) zwischen 10 und 100, bevorzugt zwischen 15 und 30 beträgt oder diesen Werten entspricht. CFD-Simulationsrechnungen zeigen, dass auf diese Weise die sich im Hauptreaktorteil ausbildende Rezirkulationszone der Gasströmung verkleinert und der erzielte Umsatz zu Synthesegasprodukten vergrößert wird.

Ein dritter Aspekt der Erfindung ist dadurch gekennzeichnet, dass der Einlassbereich zylinderförmig ist und das Längenverhältnis D2 zu D1 (D2/D1) zwischen 2 und 6, bevorzugt zwischen 3 und 5 beträgt oder diesen Werten entspricht. CFD-Simulationsrechnungen zeigen, dass auf diese Weise die sich im Hauptreaktorteil ausbildende Rezirkulationszone der Gasströmung verkleinert und der erzielte Umsatz zu Synthesegasprodukten vergrö-ßert wird.

Ein vierter Aspekt der Erfindung ist dadurch gekennzeichnet, dass der Einlassbereich kegelstumpfförmig ist und der Öffnungswinkel des Kegelstumpfs gegenüber der Längsachse des Partialoxidationsreaktors zwischen 1 und 30°, bevorzugt zwischen 5 und 20° liegt oder diesen Werten entspricht. CFD-Simulationsrechnungen zeigen, dass auf diese Weise die sich im Hauptreaktorteil ausbildende Rezirkulationszone der Gasströmung verkleinert und der erzielte Umsatz zu Synthesegasprodukten vergrößert wird.

Ein fünfter Aspekt der Erfindung ist dadurch gekennzeichnet, dass der Einlassbereich kegelstumpfförmig ist und das Längenverhältnis L1 zu Dh (L1/Dh) zwischen 10 und 100, bevorzugt zwischen 15 und 30 beträgt oder diesen Werten entspricht. CFD-Simulationsrechnungen zeigen, dass auf diese Weise die sich im Hauptreaktorteil ausbildende Rezirkulationszone der Gasströmung verkleinert und der erzielte Umsatz zu Synthesegasprodukten vergrößert wird.

Ein sechster Aspekt der Erfindung ist dadurch gekennzeichnet, dass der Einlassbereich kegelstumpfförmig ist und das Längenverhältnis D2 zu D1 (D2/D1) zwischen 2 und 6, bevorzugt zwischen 3 und 5 beträgt oder diesen Werten entspricht. CFD-Simulationsrechnungen zeigen, dass auf diese Weise die sich im Hauptreaktorteil ausbildende Rezirkulationszone der Gasströmung verkleinert und der erzielte Umsatz zu Synthesegasprodukten vergrößert wird.

Ein siebter Aspekt der Erfindung ist dadurch gekennzeichnet, dass die Brennermündung nicht in den Einlassbereich hineinragt, sondern bündig mit der feuerfesten Ausmauerung des Einlassbereichs abschließt. Auf diese Weise wird die thermische Belastung des Brenners und seiner Bestandteile verringert und seine Lebensdauer erhöht.

Ein achter Aspekt der Erfindung ist dadurch gekennzeichnet, dass keinerlei Mittel zum Hindurchleiten eines fluiden Kühlmittels durch den Partialoxidationsbrenner vorhanden sind. Dieser Aspekt ist insbesondere in Verbindung mit dem siebten Aspekt der Erfindung relevant, da hierbei die Brennermündung nicht in den Einlassbereich hineinragt, wodurch sich die thermische Belastung des Brenners und seiner Bestandteile verringert. Daher kann auf das Hindurchleiten eines fluiden Kühlmittels durch den Partialoxidationsbrenner verzichtet werden. Hierdurch wird die Störanfälligkeit des Partialoxidationsreaktors erhöht, da ein Abschalten der Anlage bei Ausfall des Kühlmittels entfällt. Als fluides Kühlmittel wird dabei im Sinne der vorliegenden Erfindung ein Fluidstrom verstanden, der nicht dem Einsatzstoffstrom, dem Oxidationsmittelstrom oder einem optionalen Moderatorstrom entspricht.

Ein neunter Aspekt der Erfindung ist dadurch gekennzeichnet, dass die die Zufuhrkanäle des Partialoxidationsbrenners in einer gemeinsamen Ebene enden, die senkrecht zur Längsachse des Brenners verläuft und somit die Brennermündung bildet. Auch dieser Aspekt ist insbesondere in Verbindung mit dem siebten und/oder achten Aspekt der Erfindung relevant, da hierbei die Brennermündung nicht in den Einlassbereich hineinragt, wodurch sich die thermische Belastung des Brenners und seiner Bestandteile verringert. Daher kann auf das Hindurchleiten eines fluiden Kühlmittels durch den Partialoxidationsbrenner verzichtet werden. Hierdurch wird die Störanfälligkeit des Partialoxidationsreaktors erhöht, da ein Abschalten der Anlage bei Ausfall des Kühlmittels entfällt.

Ein elfter Aspekt der Erfindung ist dadurch gekennzeichnet, dass bei mindestens einem der weiteren Konditionierungs- oder Verarbeitungsschritte Kohlendioxid aus dem Rohsynthesegas abgetrennt und mindestens teilweise als Moderator zu dem Partialoxidationsbrenner zurückgeführt wird. Auf diese Weise kann die stoffliche Nutzung von Kohlendioxid verbessert und seine Emission als klimaschädliches Gas verringert werden.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: eine schematische Darstellung des Querschnitts durch den zylinderförmigen Hauptreaktorteil eines Partialoxidationsreaktors gemäß Stand der Technik;
- Fig. 2: eine schematische Darstellung des Querschnitts durch den zylinderförmigen einen Partialoxidationsreaktors gemäß der Erfindung mit zylinderförmigem Einlassbereich;
- Fig. 3: eine schematische Darstellung des Querschnitts durch den zylinderförmigen einen Partialoxidationsreaktors gemäß der Erfindung mit kegelstumpfförmigem Einlassbereich;
- Fig. 4: ein Balkendiagramm der berechneten Verweilzeitverteilung für einen Partialoxidationsreaktor gemäß Stand der Technik;
- Fig. 5: ein Balkendiagramm der berechneten Verweilzeitverteilung für einen Partialoxidationsreaktor gemäß der Erfindung.

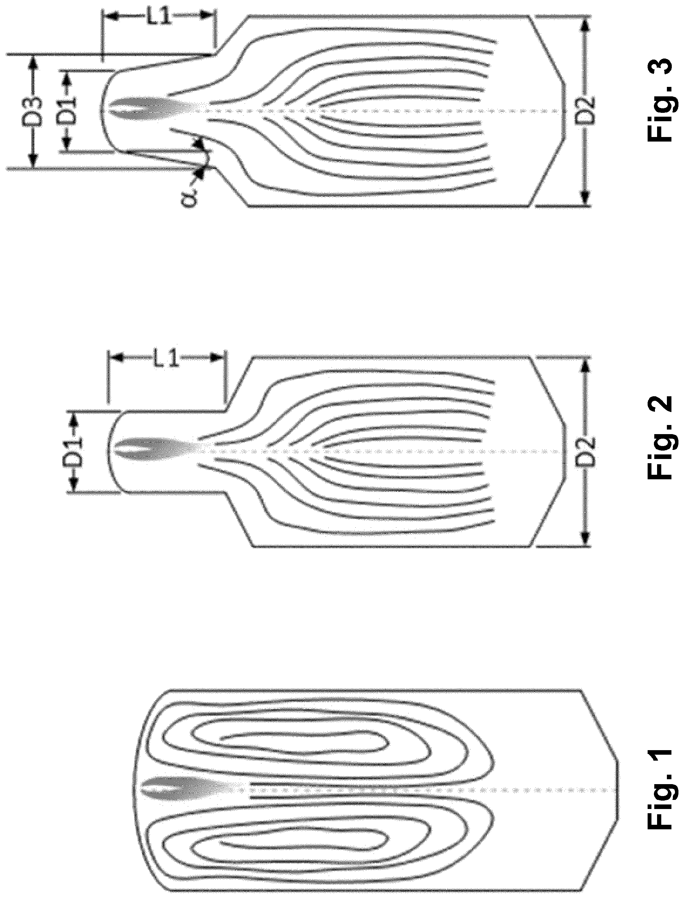

Fig. 1 zeigt eine schematische Darstellung des Querschnitts durch den zylinderförmigen Hauptreaktorteil eines Partialoxidationsreaktors gemäß des Stands der Technik. Die Position des Brenners an der oberen Reaktorkuppel ist durch eine Flamme angedeutet. Gezeigt wird zudem ein Querschnitt durch die Rezirkulationszone, angedeutet mittels Strömungslinien. Nicht gezeigt wird dagegen die ausgeprägte zentrale Gasströmung vom Eingang (Brenner) zum Ausgang des Hauptreaktorteils, die für diesen Partialoxidationsreaktor gemäß des Stands der Technik charakteristisch ist.

Fig. 2 zeigt eine schematische Darstellung des Querschnitts durch einen Partialoxidationsreaktor gemäß der Erfindung mit zylinderförmigem Einlassbereich. Auch hierbei ist die Position des Brenners durch eine Flamme angedeutet. Gezeigt wird wiederum ein Querschnitt durch die Rezirkulationszone, angedeutet mittels Strömungslinien, die gegenüber einem Partialoxidationsreaktor gemäß des Stands der Technik deutlich verkleinert ist.

Fig. 3 zeigt eine schematische Darstellung des Querschnitts durch einen Partialoxidationsreaktor gemäß der Erfindung mit kegelstupfförmigem Einlassbereich. Auch hierbei ist die Position des Brenners durch eine Flamme angedeutet. Gezeigt wird wiederum ein Querschnitt durch die Rezirkulationszone, angedeutet mittels Strömungslinien, die auch in diesem Ausführungsbeispiel der Erfindung gegenüber einem Partialoxidationsreaktor gemäß des Stands der Technik deutlich verkleinert ist.

### Zahlenbeispiele

Um die Vorteile des erfindungsgemäßen Designs des Partialoxidationsreaktors zu veranschaulichen, wurden CFD-Simulationen mit dem Computerprogramm Ansys Fluent für die partielle Oxidation von Erdgas durchgeführt, wobei das neue mit einem herkömmlichen Reaktordesign verglichen wurde.

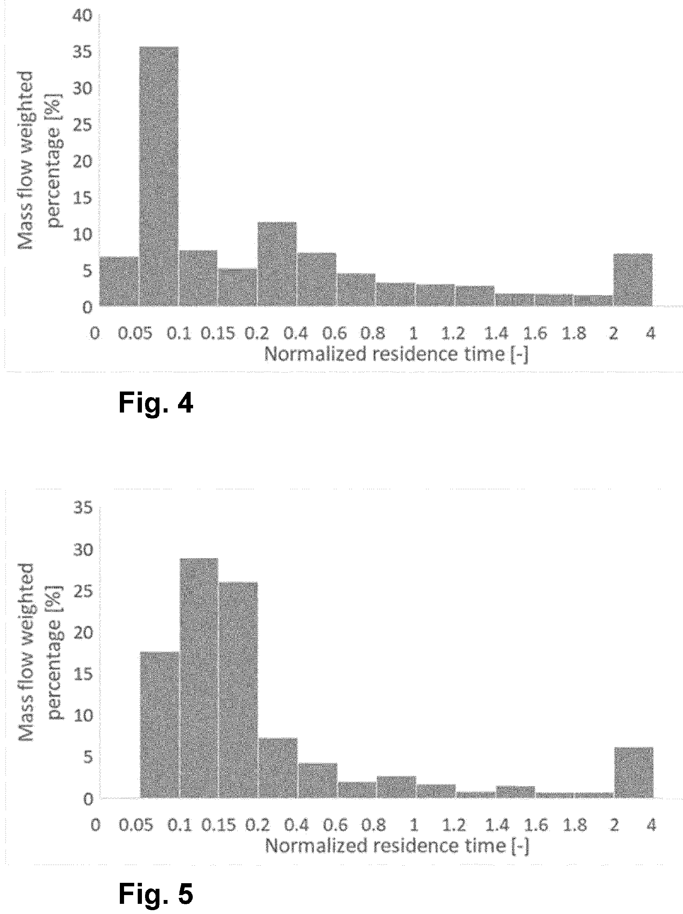

Fig. 4 zeigt als Ergebnis der CFD-Simulationen ein Balkendiagramm der berechneten Verweilzeitverteilung (normalisierte, auf die jeweilige mittlere hydrodynamische Verweilzeit bezogene Verweilzeitverteilung) für einen Partialoxidationsreaktor gemäß Stand der Technik. Deutlich ist zu erkennen, dass bei kleinen Verweilzeiten zwischen 0,05 und 0,1 ein erstes Maximum existiert, das der zentralen Gasströmung vom Eingang (Brenner) zum Ausgang des Hauptreaktorteils entspricht. Ferner besteht eine breite Werteverteilung zwischen 0,2 und 2 mit einem zweiten, ausgeprägten Maximum zwischen 0,2 und 0,4. Dies ist auf die Existenz der Rezirkulationszone zurückzuführen, die zu der breite Werteverteilung der Verweilzeiten führt.

Fig. 5 zeigt als Ergebnis der CFD-Simulationen ein Balkendiagramm der berechneten Verweilzeitverteilung (normalisierte, auf die jeweilige mittlere hydrodynamische Verweilzeit bezogene Verweilzeitverteilung) für einen Partialoxidationsreaktor gemäß der Erfindung mit zylinderförmigem Einlassbereich. Insgesamt ist die Verweilzeitverteilung für den erfindungsgemäßen Partialoxidationsreaktor enger; der Bereich zwischen 0,05 und 0,2 ist am stärksten ausgeprägt. Kürzere Verweilzeiten sind nicht vorhanden. Die Werteverteilung zwischen 0,2 und 2 ist schwächer ausgeprägt als bei dem Partialoxidationsreaktor gemäß Stand der Technik. Ein zweites Maximum besteht bei höheren Verweilzeiten zwischen 0,8 und 1 und ist deutlich weniger ausgeprägt als in Fig. 4. Dies ist auf die deutlich schwächere Rezirkulationszone bei dem erfindungsgemäßen Partialoxidationsreaktor zurückzuführen.

Änderungen an den im Vorstehenden beschriebenen Ausführungsformen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

## Patentansprüche

1. Partialoxidationsreaktor (POX-Reaktor) zum Herstellen eines Rohsynthesegasstroms durch partielle Oxidation eines gasförmigen, flüssigen oder in einer Trägerflüssigkeit oder einem Trägergas dispergierten, festen, partikelförmigen, kohlenstoffhaltigen Einsatzstoffstroms in Gegenwart eines sauerstoffhaltigen Oxidationsmittelstroms und optional eines Moderatorstroms, enthaltend Wasserdampf und/oder Kohlendioxid, umfassend folgende, miteinander in Fluidverbindung stehende Bestandteile und/oder Baugruppen:
(a) einen zylinderförmigen oder kegelstumpfförmigen Einlassbereich, umfassend eine drucktragende, gasundurchlässige erste Außenwand, die auf ihrer Innenseite mit einer feuerfesten Ausmauerung ausgekleidet ist, wobei
(a1) der zylinderförmige Einlassbereich eine Länge L1 und an seinem Eingang und an seinem Ausgang einen freien Innendurchmesser D1 aufweist oder
(a2) der kegelstumpfförmige Einlassbereich eine Länge L1 und an seinem Eingang einen freien Innendurchmesser D1 und an seinem Ausgang einen freien Innendurchmesser D3 aufweist;
(b) einen zylinderförmigen Hauptreaktorteil, umfassend eine drucktragende, gasundurchlässige zweite Außenwand, die auf ihrer Innenseite mit einer feuerfesten Ausmauerung ausgekleidet ist, wobei der zylinderförmigen Hauptreaktorteil eine Länge L2 und einen freien Innendurchmesser D2 aufweist, wobei L2 größer ist als L1 und wobei D2 größer ist als D1 und D3;
(c) einen zwischen Einlassbereich und Hauptreaktorteil angeordneten und diese gasdicht verbindenden, kegelstumpfförmigen oder kuppelförmigen Übergangsbereich, umfassend eine drucktragende, gasundurchlässige dritte Außenwand, die auf ihrer Innenseite mit einer feuerfesten Ausmauerung ausgekleidet ist, wobei der kegelstumpfförmige oder kuppelförmige Übergangsbereich eine Länge L3 und an seinem eingangsseitigen Ende einen freien Innendurchmesser D1 oder D3 aufweist und an seinem ausgangsseitigen Ende einen freien Innendurchmesser D2 aufweist, wobei L3 kleiner ist als L1;
(d) einen Partialoxidationsbrenner (POX-Brenner), der gasdicht mit dem Einlassbereich verbunden ist, wobei der Partialoxidationsbrenner folgende Bestandteile umfasst:
(d1) einen zentralen, einen kreisförmigen Querschnitt aufweisenden, ersten Zufuhrkanal,
(d2) einen weiteren, den ersten Zufuhrkanal koaxial und konzentrisch umgebenden, zweiten Zufuhrkanal als Ringspalt zwischen der Außenwand des ersten Zufuhrkanals und der Innenwand des zweiten Zufuhrkanals,
(d3) optional einen weiteren, den zweiten Zufuhrkanal koaxial und konzentrisch umgebenden, dritten Zufuhrkanal als Ringspalt zwischen der Außenwand des zweiten Zufuhrkanals und der Innenwand des dritten Zufuhrkanals,
(d4) Mittel zum getrennten Zuführen des kohlenstoffhaltigen Einsatzstoffstroms, des sauerstoffhaltigen Oxidationsmittelstroms und des optionalen Moderatorstroms zu dem ersten, zweiten und optionalen dritten Zufuhrkanal, wobei der Zufuhrkanal für den sauerstoffhaltigen Oxidationsmittelstrom einen hydraulischen Durchmesser Dh aufweist;
(e) einen Produktauslass für den Rohsynthesegasstrom, der gasdicht mit dem Hauptreaktorteil verbunden ist;
(f) Mittel zum Einleiten des Einsatzstoffstroms, des Oxidationsmittelstroms und des mindestens einen, optionalen Moderatorstroms zu dem Partialoxidationsbrenner;
(g) Mittel zum Ausleiten des Rohsynthesegasstroms aus dem Partialoxidationsreaktor über den Produktauslass.

2. Partialoxidationsreaktor nach Anspruch 1, **dadurch gekennzeichnet, dass** der Einlassbereich zylinderförmig ist und das Längenverhältnis L1 zu Dh (L1/Dh) zwischen 10 und 100, bevorzugt zwischen 15 und 30 beträgt oder diesen Werten entspricht.

3. Partialoxidationsreaktor nach Anspruch 1 oder 2, **dadurch gekennzeichnet, dass** der Einlassbereich zylinderförmig ist und das Längenverhältnis D2 zu D1 (D2/D1) zwischen 2 und 6, bevorzugt zwischen 3 und 5 beträgt oder diesen Werten entspricht.

4. Partialoxidationsreaktor nach Anspruch 1, **dadurch gekennzeichnet, dass** der Einlassbereich kegelstumpfförmig ist und der Öffnungswinkel des Kegelstumpfs gegenüber der Längsachse des Partialoxidationsreaktors zwischen 1 und 30°, bevorzugt zwischen 5 und 20° liegt oder diesen Werten entspricht.

5. Partialoxidationsreaktor nach Anspruch 4, **dadurch gekennzeichnet, dass** der Einlassbereich kegelstumpfförmig ist und das Längenverhältnis L1 zu Dh (L1/Dh) zwischen 10 und 100, bevorzugt zwischen 15 und 30 beträgt oder diesen Werten entspricht.

6. Partialoxidationsreaktor nach Anspruch 4 oder 5, **dadurch gekennzeichnet, dass** der Einlassbereich kegelstumpfförmig ist und das Längenverhältnis D2 zu D1 (D2/D1) zwischen 2 und 6, bevorzugt zwischen 3 und 5 beträgt oder diesen Werten entspricht.

7. Partialoxidationsreaktor nach einem der Ansprüche 1 bis 6, **dadurch gekennzeichnet, dass** die Brennermündung nicht in den Einlassbereich hineinragt, sondern bündig mit der feuerfesten Ausmauerung des Einlassbereichs abschließt.

8. Partialoxidationsreaktor nach Anspruch 7, **dadurch gekennzeichnet, dass** keinerlei Mittel zum Hindurchleiten eines fluiden Kühlmittels durch den Partialoxidationsbrenner vorhanden sind.

9. Partialoxidationsreaktor nach einem der vorigen Ansprüche, **dadurch gekennzeichnet, dass** die die Zufuhrkanäle des Partialoxidationsbrenners in einer gemeinsamen Ebene enden, die senkrecht zur Längsachse des Brenners verläuft und somit die Brennermündung bildet.

10. Verfahren zum Herstellen eines Rohsynthesegasstroms durch partielle Oxidation eines gasförmigen, flüssigen oder in einer Trägerflüssigkeit oder einem Trägergas dispergierten, festen, partikelförmigen, kohlenstoffhaltigen Einsatzstoffstroms in Gegenwart eines sauerstoffhaltigen Oxidationsmittelstroms und optional mindestens eines Moderatorstroms, enthaltend Wasserdampf und/oder Kohlendioxid, umfassend folgende Schritte:
(a) Bereitstellen eines Partialoxidationsreaktors nach Anspruch 1 bis 6;
(b) Bereitstellen des kohlenstoffhaltigen Einsatzstoffstroms, des sauerstoffhaltigen Oxidationsmittelstroms und des mindestens einen optionalen Moderatorstroms;
(c) Einleiten des kohlenstoffhaltigen Einsatzstoffstroms, des sauerstoffhaltigen Oxidationsmittelstroms und des mindestens einen optionalen Moderatorstroms in den Partialoxidationsreaktor über den Partialoxidationsbrenner;
(d) Umsetzen des kohlenstoffhaltigen Einsatzstoffstroms mit dem sauerstoffhaltigen Oxidationsmittelstrom im Partialoxidationsreaktor unter Bedingungen der nichtkatalytischen Partialoxidation;
(e) Ausleiten des Rohsynthesegasstroms aus dem Partialoxidationsreaktor über den Produktauslass;
(f) optional Zuführen des Rohsynthesegasstroms zu weiteren Reinigungs-, Konditionierungs- oder Verarbeitungsschritten.

11. Verfahren nach Anspruch 10, **dadurch gekennzeichnet, dass** bei mindestens einem der weiteren Konditionierungs- oder Verarbeitungsschritte Kohlendioxid aus dem Rohsynthesegas abgetrennt und mindestens teilweise als Moderator zu dem Partialoxidationsbrenner zurückgeführt wird.
